# EUROPÄISCHE PATENTSCHRIFT

(11) **EP 0 733 276 B1**
(45) Veröffentlichungstag und Bekanntmachung des Hinweises auf die Patenterteilung: **28.04.1999**
(21) Anmeldenummer: 95935399.6
(22) Anmeldetag: 28.09.1995
(51) Int. Cl.: H02G 3/12, H02G 3/08

(54) **GERÄTEEINBAUDOSE FÜR INSTALLATIONSKANÄLE**
FLUSH MOUNTING EQUIPMENT CONNECTION BOX FOR INSTALLATION DUCTS
BOITE DE CONNEXION D'APPAREILS POUR MONTAGE AFFLEURE DANS DES CONDUITS D'INSTALLATION

(30) Priorität: 11.10.1994 DE 4436147
(43) Veröffentlichungstag der Anmeldung: 25.09.1996
(73) Patentinhaber: Albert Ackermann GmbH & Co. KG, 51643 Gummersbach (DE)
(72) Erfinder: KNIER, Günther, G., D-51647 Gummersbach (DE)
(74) Vertreter: Wilhelm & Dauster Patentanwälte European Patent Attorneys
(86) Internationale Anmeldenummer: EP9503832
(87) Internationale Veröffentlichungsnummer: WO9611519

(56) Entgegenhaltungen:
- EP-A- 0 240 916
- DE-A- 4 111 285
- US-A- 4 151 926

## Beschreibung

Die Erfindung eine Geräteeinbaudose für Installationskanäle, insbesondere Wandinstallationskanäle mit einem zum Kanalinneren hin allseitig geschlossenen Schutzgehäuse aus elektrisch isolierendem Material zum Einbau von Installationsgeräten, das mit mindestens einer Einführöffnung für eine Anschlußleitung versehen ist.

Es ist bekannt, daß Installationsgeräte, z.B. Starkstromsteckdosen, in Installationskanälen aus einseitig offenen U-Profilen montiert werden können und daß sie, um den notwendigen Berührungsschutz sicherzustellen, in diesen Installationskanälen mit Hilfe von aus Isolierstoff hergestellten Geräteinbaudosen eingebaut werden. Diese Geräteeinbaudosen weisen im allgemeinen eine zum Kanalinneren geschlossene Topfform auf, wobei Boden- und Seitenwände Öffnungen zum Einführen der Anschlußleitungen aufweisen können, durch die die Anschlußleitungen für die Installationsgeräte durchgefädelt werden müssen. Bei der Montage von Installationsgeräten wird zunächst die Geräteeinbaudose im Kanal in bekannter Weise befestigt, und es werden die Anschlußleitungen für den Anschluß einer Steckdose durch die geöffneten Leitungseinführungen in die Geräteeinbaudose eingefädelt, abisoliert und zum Anschluß vorbereitet. Die Leitungen werden dann an in der Regel an der Seite der Steckdose vorgesehenen Anschlußklemmen angeschlossen, so daß dann die Steckdose in der Geräteeinbaudose befestigt werden kann. Abschließend werden die aus der Geräteeinbaudose kommenden Leitungen durch an den Leitungseinführungsöffnungen vorhandene Zugentlastungen gegen Zug und Schub gesichert. Dieser Montagevorgang ist verhältnismäßig aufwendig.

Man hat daher auch schon Schutzgehäuse spezieller Art zum Einbau in Installationskanälen vorgeschlagen (DE 41 11 285 A1), bei denen an der Außenseite des Bodens Anschlußräume für Leitungen vorgesehen sind, die durch einen Verschlußdeckel abschließbar sind. Dabei sind Durchbrüche im Gehäuseboden vorgesehen, durch die kurze Anschlußleitungen zu den Installationsgeräten verlegt werden können, die zu Verbindungsklemmen führen, die wiederum in einem nach unten offenen quergelegten Hohlraum untergebracht sind. An diesen Verbindungsklemmen können dann die Anschlußkabel angeschlossen werden, wonach handelsübliche Zugentlastungen die Anschlußkabel sichern, ehe der Deckel des Bodens geschlossen wird. Bei diesen Bauarten ist es notwendig, die in der Geräteeinbaudose vormontierten Installationsgeräte durch gesonderte Verbindungsleitungen mit den Verbindungsklemmen zu verbinden. Mit dieser Bauart ist zwar eine Vormontage von Installationsgeräten möglich. Es müssen aber zusätzliche Verbindungsklemmen und Anschlüsse vorgesehen werden.

Aus dem DE-Gbm 93 13 599, dem DE-Gbm 92 03 112 oder der EP 0 240 916 A2 sind schließlich noch Bauarten spezieller Art für Schutzgehäuse bekannt, bei denen man seitlich von dem eigentlichen Schutzgehäuse, das bei dem zuerst genannten Gebrauchsmuster auf eine besondere Halterung aufgesetzt werden muß, Anschlußräume vorgesehen hat, die durch Klappdeckel verschließbar sind. An diese Anschlußräume können dann zwar bei vormontierten Installationsgeräten die Anschlußleitungen aufgelegt werden. Auch bei diesen Bauarten wird es allerdings notwendig, eine Verdrahtung von den Anschlußräumen zu den Installationsgeräten, wie bei den eingangs erwähnten Bauarten vorzusehen. Die Schutzgehäuse sind auch nicht für alle im Handel erhältlichen Installationsgeräte einsetzbar.

Der Erfindung liegt die Aufgabe zugrunde, eine Geräteeinbaudose der eingangs genannten Art so auszubilden, daß eine Vormontage von Installationsgeräten in dem Schutzgehäuse ohne die Anordnung zusätzlicher Verbindungsklemmen oder Verdrahtungen möglich ist, wobei aber der Anschluß dennoch in bekannter Weise an den Installationsgeräten erfolgen kann.

Zur Lösung dieser Aufgabe wird bei einer Geräteeinbaudose der eingangs genannten Art vorgesehen, daß das Schutzgehäuse ein Bodenteil aufweist, das aus mindestens einer abklappbaren Schale besteht, deren Seitenwände mindestens zum Teil die Seitenwände der Einbaudose bilden. Durch diese Ausgestaltung wird es in einfacher Weise möglich, Installationsgeräte in der Geräteinbaudose vorzumontieren und zum Einsatzort zu liefern, wo dann die Bodenschale aufgeklappt wird, so daß die Anschlußstellen der Installationsgeräte in bekannter Weise zugängig sind. In Weiterbildung der Erfindung kann die Schale an ihrer abklappbaren Seite mit einer Ausnehmung versehen sein, die im geschlossenen Zustand mit dem an sie angrenzenden Wandteil des Schutzgehäuses eine Zugentlastungseinrichtung für die Anschlußleitung bildet. Ist der Anschluß vorgenommen, dann braucht die Bodenschale lediglich in ihre geschlossene Stellung zurückgeklappt werden, so daß dann auch durch den Schließvorgang schon die Zugentlastung für die Anschlußleitungen erreicht ist. Die geschlossene Geräteeinbaudose kann dann in bekannter Weise im Installationskanal befestigt werden.

Die erfindungsgemäße Ausgestaltung weist auch den Vorteil auf, daß bei einem nachträglich Ausbau des Schutzgehäuses mit dem eingebauten Installationsgerät weiterhin Berührungsschutz besteht, so daß z.B. dann, wenn zusätzliche Fernmeldeanschlüsse oder sonstige Schwachstromanschlüsse vorgenommen werden müssen, nicht unbedingt eine Stromabschaltung erfolgen muß.

In Weiterbildung der Erfindung kann die Schale mit angespritzten Schwenkzapfen versehen sein, die in Aufnahmeöffnungen eines mit dem oberen Teil des Schutzgehäuses festen Bodenteiles einrastbar sind. Durch diese Maßnahme ergibt sich ein einfacher Aufbau der Geräteeinbaudose nach der Erfindung. Die Schale kann in Weiterbildung der Erfindung an der abklappbaren Seite Rasthaken zum Einrasten in entsprechende Öffnungen des oberen Teiles aufweisen, die so angeordnet sind, daß sie durch einen Zugriff von außen aus ihrer Raststellung gelöst werden können.

In Weiterbildung der Erfindung kann insbesondere für den Einbau von zwei oder mehr Installationsgeräten die Doppel-Geräteeinbaudose in der Mitte einen festen Bodenteil in der Form eines nach unten ragenden Bügels aufweisen, wobei an diesen Bügel zwei Schalen spiegelsymmetrisch angelenkt sind. Die Schalen können schließlich in Weiterbildung der Erfindung auch an ihren Seiten oder Stirnseiten zusätzliche konventionelle Öffnungen zum Durchführen von Anschlußkabeln aufweisen, so daß die neue Doppel-Geräteeinbaudose auch im nicht geöffneten Zustand anstelle konventioneller Doppel-Geräteeinbaudosen verwendbar ist. Zusätzlich weist sie aber den Vorteil auf, daß bei Bedarf der Dosenunterteil abklappbar ist, so daß die Unterseite der eingebauten Installationsgeräte für einen Anschluß zugängig wird, ohne daß ein Lösen der Installationsgeräte aus ihrem Schutzgehäuse notwendig wird. Die neue Doppel-Geräteeinbaudose kann schließlich mit Befestigungseinrichtungen bekannter Art zum Einsetzen in die Installationskanäle versehen sein.

Die Erfindung ist anhand von Ausführungsbeispielen in der Zeichnung gezeigt und wird im folgenden beschrieben. Es zeigen:
- Fig. 1: einen schematischen Querschnitt eines Wandinstallationskanales mit einer eingesetzten erfindungsgemäßen Doppel-Geräteeinbaudose, die mit Installationsgeräten bestückt ist,
- Fig. 2: den Schnitt durch die Doppel-Geräteeinbaudose der Figur 1 in Richtung der Schnittlinie II-II, wobei der Installationskanal weggelassen ist,
- Fig. 3: eine Explosionsdarstellung der für die neue Doppel-Geräteeinbaudose der Figuren 1 und 2 verwendeten Einzelteile,
- Fig. 4: eine vergrößerte Teildarstellung des Detailes (IV) der Figur 3,
- Fig. 5: das Detail der Figur 4 um 90° verschwenkt,
- Fig. 6: die Doppel-Geräteeinbaudose der Figuren 1 bis 3 mit beidseitig geöffneten Klappschalen in einer Seitenansicht,
- Fig. 7: die Doppel-Geräteeinbaudose der Figur 6 in einem Schnitt durch die Längsmitte der Dose und während des Anschlußvorganges von zwei Anschlußleitungen,
- Fig. 8: die linke Hälfte der Doppel-Geräteanschlußdose nach Figur 6, jedoch im geschlossenen Zustand der Klappschale,
- Fig. 9: eine Draufsicht auf die Doppel-Geräteeinbaudose der Figuren 6 und 7 mit einer eingebauten 3fach-Steckdose,
- Fig. 10: die Stirnansicht der Doppel-Geräteeinbaudose der Figuren 6 und 7 bei geöffneten Klappschalen,
- Fig. 11: die Stirnansicht gemäßt Figur 10, jedoch mit geschlossener Klappschale,
- Fig. 12: die Doppel-Geräteeinbaudose der Figuren 1 bis 8, jedoch mit einem eingeschobenen Zwischenteil, das als Spurstück zur Verwendung der Doppel-Geräteeinbaudose zum Einbau von zwei Installationsgeräten dient,
- Fig. 13: die Draufsicht auf die Doppel-Geräteeinbaudose der Figur 12 mit zwei eingesetzten Installationsgeräten,
- Fig. 14: eine andere Ausführungsform einer erfindungsgemäßen Doppel-Geräteeinbaudose, die nur zum Einbau eines Installationsgerätes vorgesehen ist,
- Fig. 15: die Seitenansicht der Doppel-Geräteeinbaudose der Figur 14,
- Fig. 16: die Doppel-Geräteeinbaudose der Figuren 14 und 15 in einer Stirnansicht und mit geöffneter Bodenschale, und
- Fig. 17: die Stirnansicht gemäß Figur 16, jedoch mit geschlossener Bodenschale mit zwei zwischen Bodenschale und Oberteil gehaltenen und zugentlasteten Anschlußleitungen im Querschnitt.

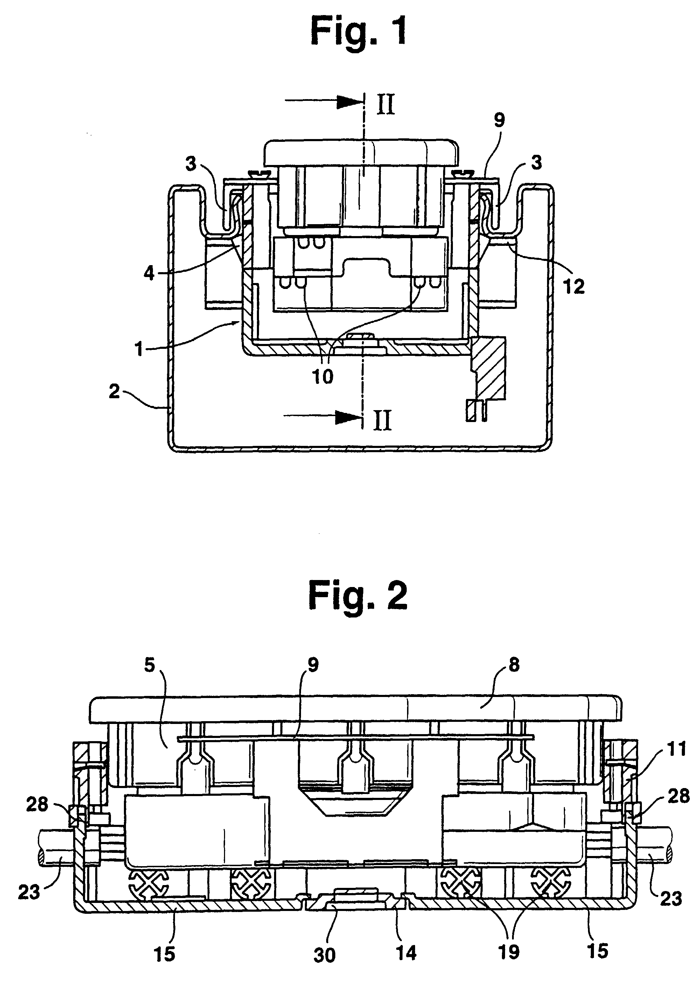

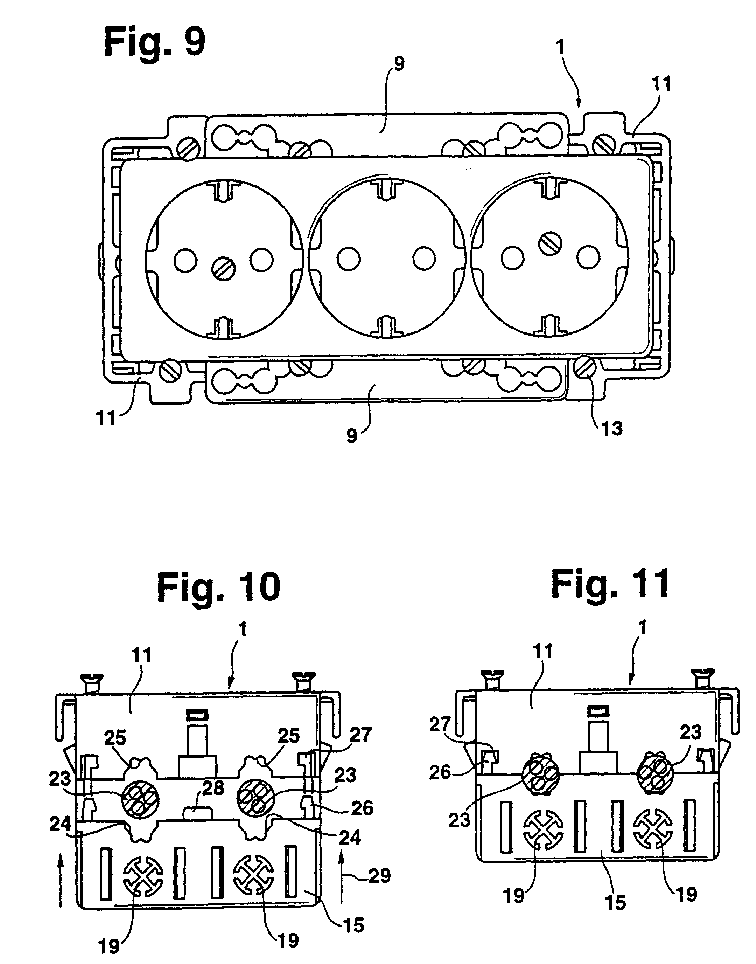

In der Figur 1 ist zu erkennen, daß eine Doppel-Geräteeinbaudose (1) in einen Wandinstallationskanal (2) eingesetzt ist, der in bekannter Weise aus einem etwa U-förmigen Metallprofil mit von den freien Schenkeln nach innen geführten Einhängerinnen besteht. In diese Rinnen greifen Einhängehaken (3) der Geräteeinbaudose (1) in an sich bekannter Weise ein, die in ebenfalls bekannter Weise in ihrer Einhängelage durch Rastnasen (4) und Spannbügel (12) gesichert sind. In die Doppel-Geräteeinbaudose (1) ist beim Ausführungsbeispiel eine handelsübliche 3-fach-Steckdose (5) eingebaut, die mit einer Abdeckplatte (8) versehen ist und einen Befestigungsbügel (9) aufweist (siehe Figur 9), mit dem sie in bekannter Weise an entsprechenden Befestigungsspuren der Doppel-Geräteeinbaudose (1) befestigt ist. Die Steckdose (5) besitzt in bekannter Weise in ihrem unteren Bereich Anschlußklemmen zum schraublosen Anklemmen von Anschlußleitern. Die 3-fach Steckdose könnte aber auch mit bekannten mit Klemmschrauben versehenen Anschlußklemmen ausgerüstet sein. Die Anschlußklemmen (10) der 3fach-Steckdose (5) sind in Figur 1 erkennbar.

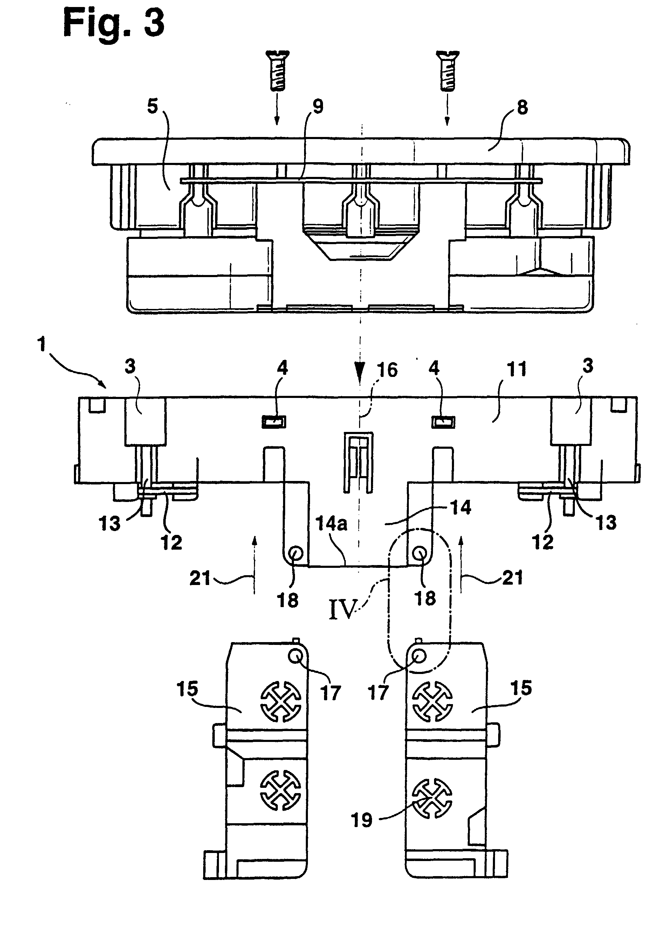

Die Doppel-Geräteeinbaudose (1) besteht, was insbesondere auch aus Figur 3 erkennbar wird, aus einem umlaufenden Rahmenoberteil (11), das mit den Einhängelaschen (3), mit den Rastnasen (4) und mit Spannbügeln (12) versehen ist, die in bekannter Weise zum Verriegeln der Einbaulage von oben her durch Drehbolzen (13) betätigbar sind. Dieser Rahmen (11) ist nach unten auf beiden Seiten eines nach unten ragenden Bügels (14) offen, während der Bügel (14) mit seinem nicht näher gezeigten Verbindungssteg (14a) einen Teil des Bodens der Doppel-Geräteeinbaudose (1) bildet. Den übrigen Boden bilden zwei Klappschalen (15), die beim Ausführungsbeispiel spiegelsymmetrisch zu der Mittelebene (16) der Doppel-Geräteeinbaudose ausgebildet sind und um die an einem ihrer Enden angeordneten Schwenkzapfen (17), die in Schwenklager (18) am Bügel (14) einrastbar sind, in eine geschlossene Lage schwenkbar sind, wie sie in der Figur 2 dargestellt ist. Die Schwenkzapfen (17) sind dabei als kleine seitlich von der Außenwandung der Schalen (15) abstehende Noppen mit einer schrägen Einführfläche (20) ausgebildet, die dann, wenn die Schale (15) in Richtung des Pfeiles (21) geführt wird, in die kreisförmigen vertieften Aufnahmelager (18) einschnappen, nachdem ihre Schräge (20) an der entsprechenden Gegenschräge (22) eingeführt worden ist. Die beiden Schalen (15) bilden mit ihren Seitenwänden einen Teil der Wand der als Schutzgehäuse dienenden Doppel-Geräteinbaudose (1). Sie bilden mit dem Rahmen (11) und dem Bügel (14) zusammen ein nach unten allseitiger geschlossenes Schutzgehäuse für die Installationsgeräte (3fach-Steckdose 5). Die aus dem Rahmen (11) und den Schalen (15) bestehende Doppel-Geräteeinbaudose (1) besteht aus Isoliermaterial, beispielsweise aus einem Kunststoff, und sie läßt sich mit geschlossenen Schalen nach Figur 2 oder 8 in bekannter Weise als Schutzgehäuse für Installationsgeräte verwenden. Zu diesem Zweck sind die Schalen (15) auf ihren beiden Seiten und an der Stirnseite mit je zwei in konventioneller Weise ausgebildeten Einführöffnungen (19) für Anschlußkabel versehen, die beim Ausführungsbeispiel jeweils aus kreuzförmig ausgebildeten Schlitzen bestehen, die in außenliegende Querteile münden, so daß zwischen diesen Schlitzen jeweils etwa pfeilförmig nach innenragende Teilwandstücke bestehen bleiben, die mit einer geringeren Wandstärke versehen sind, so daß sie sich beim Einführen eines Anschlußkabels nach innen umbiegen. Durch diese Einführöffnungen (19) können Anschlußkabel in konventioneller Weise, wie bei üblichen Geräteeinbaudosen, eingefädelt und mit den, zunächst noch nicht in der Geräteeinbaudose befestigten, Installationsgeräten verbunden werden.

Die neue Doppel-Geräteeinbaudose (1) kann aber auch wegen der schwenkbar angeordneten Schalen (15) in besonders einfacher Weise so eingesetzt werden, daß sich das relative aufwendige Durchfädeln und Anschließen von Anschlußkabeln erübrigt.

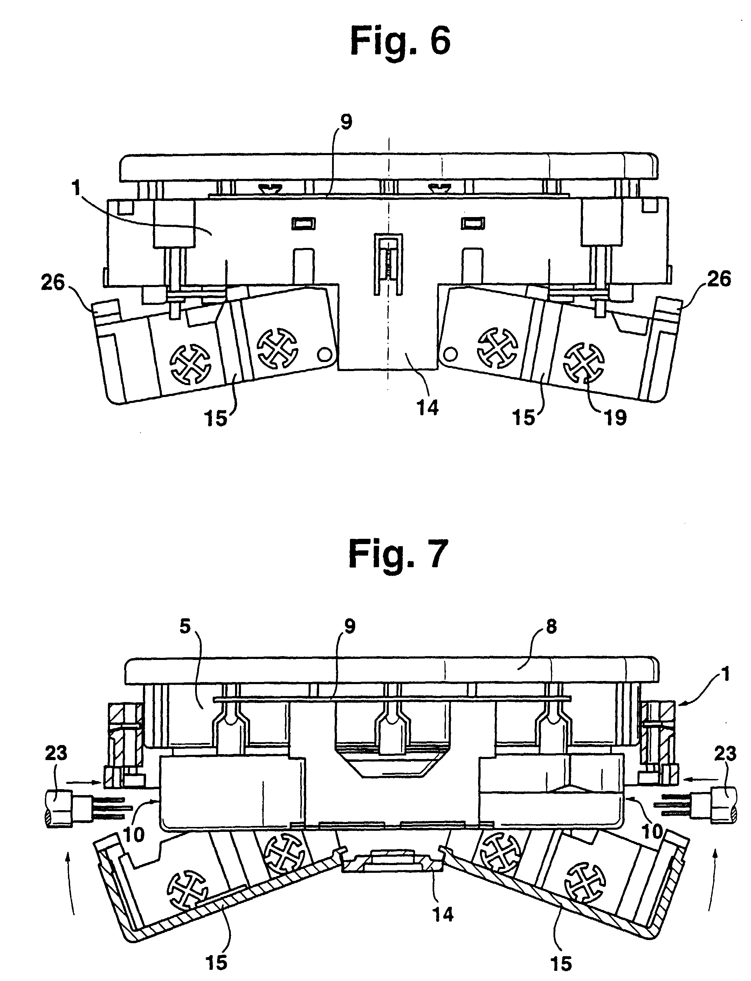

Die Figur 7 zeigt, daß man bei geöffneten Schalen (15) ohne weiteres an den Anschlußklemmenbereich (10) der 3fach-Steckdose (5) herankommen kann und zwar ohne daß diese 3fach-Steckdose aus der Doppel-Geräteeinbaudose (1) herausgenommen werden muß. Bei abgeklappten Schalen (15) besitzt die Doppel-Geräteeinbaudose (1) im Bereich dieser Schalen (15) keinen Boden und keine durchgehenden Seitenwände mehr, so daß es, wie angedeutet, ohne weiteres möglich ist, die abisolierten Enden von Anschlußkabeln (23), die aus dem Installationskanal (2) herausgeführt werden, in die entsprechenden Anschlußklemmen (10) einzuführen oder bei schraubbetätigten Anschlußklemmen in diese einzuführen und dann die Klemmschrauben anzuziehen. Ist dies geschehen, dann können die Schalen (15) hochgeklappt werden, so daß die Doppel-Geräteeinbaudose ein nach unten allseitig geschlossenes Schutzgehäuse bildet.

Um dies zu erreichen, sind die Schalen (15) an ihren Stirnseiten mit Ausnehmungen (24) versehen, die in etwa der Hälfte des Querschnittes des einzuführenden Anschlußkabels entsprechen. Die Ausnehmungen (24) sind dabei mit Klemmspitzen versehen, die sich in den Mantel der Anschlußkabel (23) eindrükken können. In gleicher Weise ist die Stirnseite des Rahmenteiles (11) der Doppel-Geräteeinbaudose (1) jeweils mit Ausnehmungen (25) spiegelsymmetrisch zu den Ausnehmungen (24) der Schale (15) versehen, so daß die Ausnehmungen (24 und 25) nach dem Schließen der Schale (15) sich jeweils in den Mantel der Anschlußkabel (23) eindrücken und auf diese Weise eine Zugentlastung bilden, die nicht gesondert, z.B. durch Schrauben, geklemmt werden muß.

Um die geschlossene Lage der Schale (15) jeweils zu sichern, sind diese an ihren freien Wandteilen (Figuren 10 und 11) mit nach oben ragenden Rasthaken (26) versehen, die mit der Schließbewegung der Schalen (15) im Sinn der Pfeile (29) in entsprechende Ausnehmungen (27) im Rahmenteil (11) einrasten. Die Ausnehmungen (27) sind dabei nach außen offen, so daß es zum Öffnen der Schale (15) möglich ist, die Rasthaken (26) aus ihrer Raststellung herauszubewegen, so daß sich dann die Schale öffnen läßt. Jede Schale (15) greift im geschlossenen Zustand mit mindestens einer Lasche (28) hinter ein entsprechendes Wandteil des Rahmens (11), so daß ein einwandfreier Sitz der Schale im geschlossenen Zustand erreicht ist. Zusätzlich können ebenfalls noch hintereinandergreifende Wandteile zur Sicherung der geschlossenen Lage vorgesehen werden.

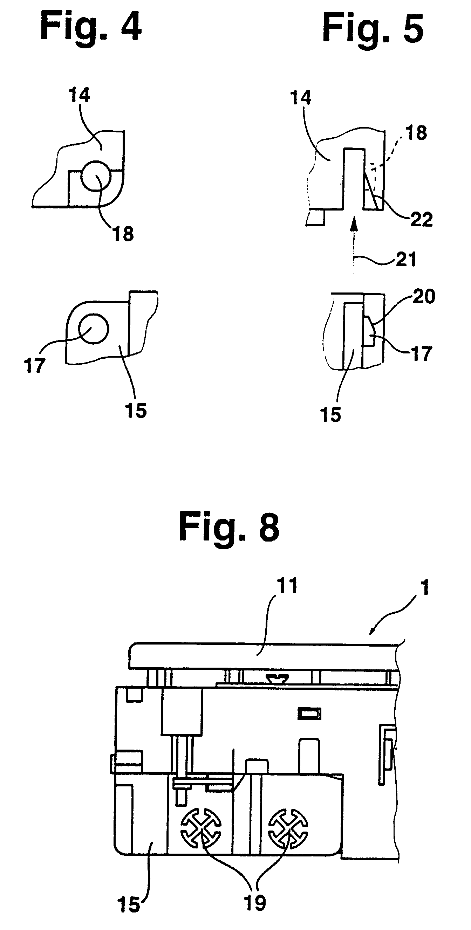

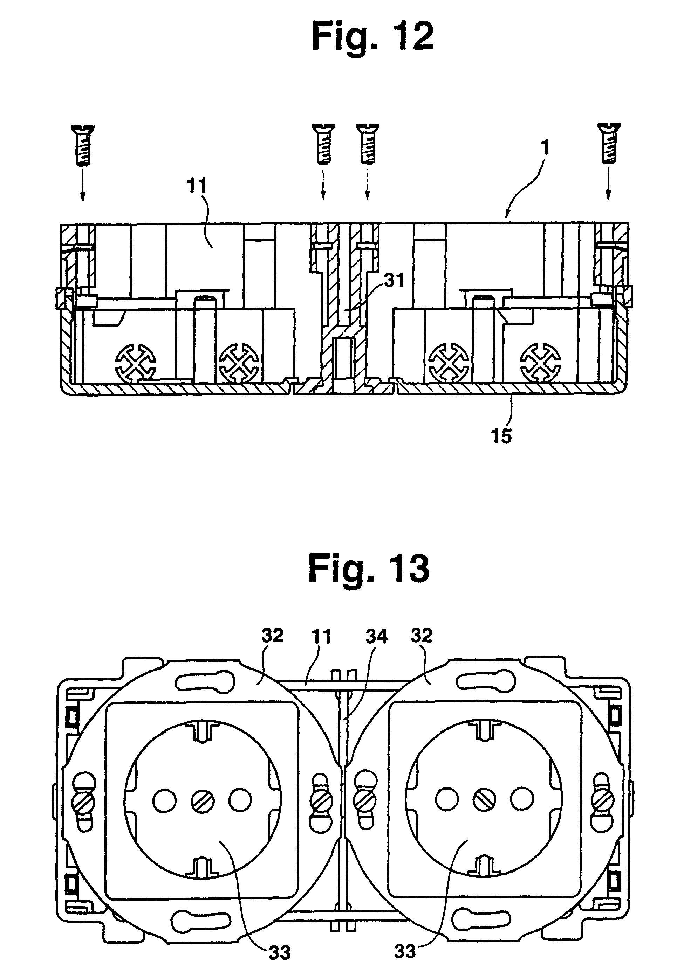

Die Figuren 12 und 13 zeigen die Doppel-Geräteeinbaudose (1) der Figuren 1 bis 11 in einer abgewandelten Form insoweit, als hier in die Öffnung (30) im Bügel (14) ein Zwischenteil (31) von unten her eingeschoben ist, das im eingeschobenen Zustand als Spurstück für die Befestigung jeweils eines Befestigungsringes (32) (Figur 13) für je eine Steckdose (33) dient. Durch das eingeschobene Spurstück (31) kann die Doppel-Geräteeinbaudose (1) zum Einbau zweier handelsüblicher Einzelsteckdosen (33) dienen, die sich auch noch gegeneinander durch eine eingeschobene Trennwand (34) isolieren lassen, z.B. bei getrennten Stromarten oder -kreisen.

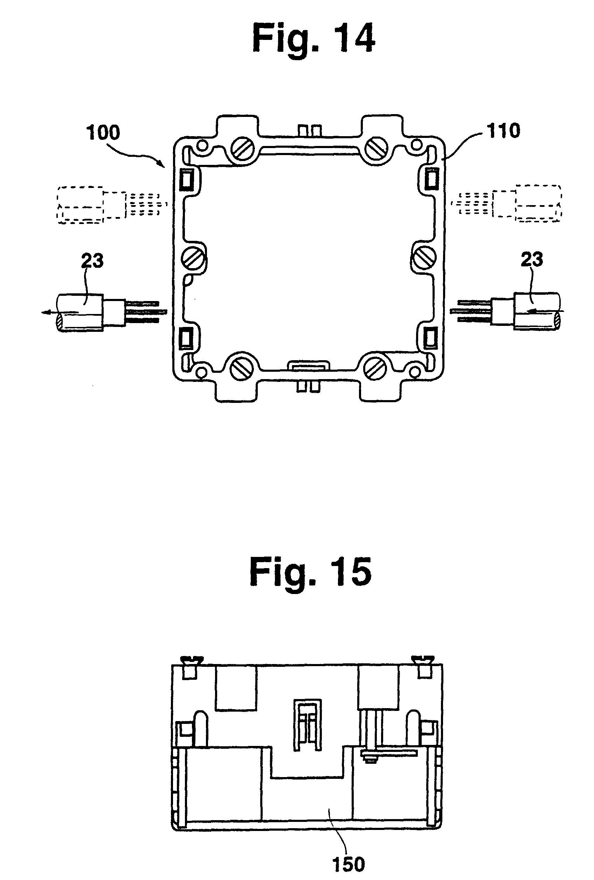

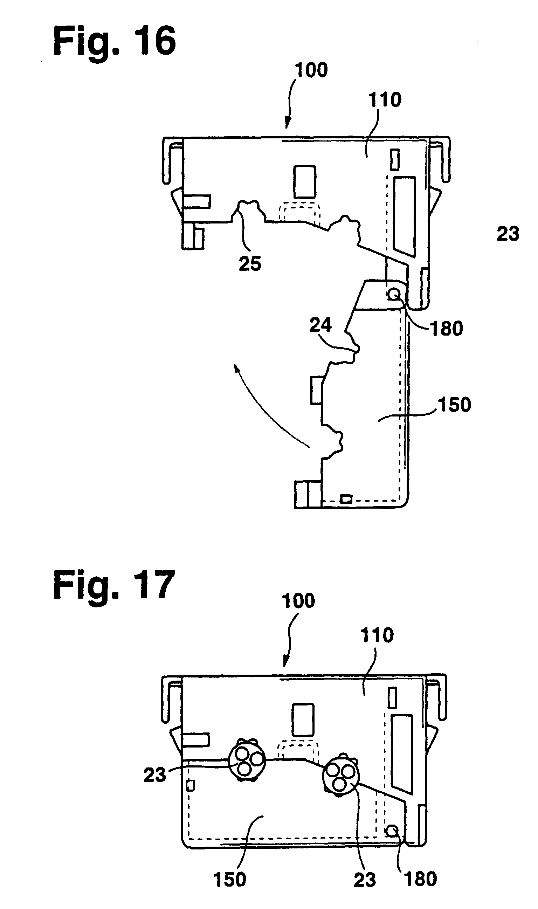

In den Figuren 14 bis 17 ist eine Ausführungform einer erfindungsgemäßen Geräteeinbaudose gezeigt, die nur zum Einbau einer einzelnen - nicht gezeigten - Steckdose oder eines anderen Installationsgerätes dient. Hier ist nur eine abklappbare Schale (150) als Bodenteil des Rahmens (110) vorgesehen. Die Trennlinie zwischen dem Rahmen (110) und der Schale (150), die um das Schwenklager (180) schwenkbar ist und aus der in der Figur 16 gezeigten geöffneten Stellung im Uhrzeigersinn in die geschlossene Stellung nach Figur 17 geschwenkt werden kann, verläuft nicht parallel zu Ober- und Unterkante der insgesamt mit (100) bezeichneten Geräteeinbaudose, sondern abgewinkelt dazu. Im übrigen sind auch hier wieder die Ausnehmungen (24 und 25) zur Bildung einer Zugentlastung für die Anschlußkabel (23) vorgesehen.

## Patentansprüche

1. Geräteeinbaudose für Installationskanäle, insbesondere Wandinstallationskanäle (2) mit einem zum Kanalinneren hin allseitig geschlossenen Schutzgehäuse (1, 100) aus elektrisch isolierendem Material zum Einbau von Installationsgeräten, das mit mindestens einer Einführöffnung (19, 24, 25) für eine Anschlußleitung (23) versehen ist, dadurch gekennzeichnet, daß das Schutzgehäuse (1, 100) ein Bodenteil aufweist, das von mindestens einer nach unten abklappbaren Schale (15, 150) gebildet ist, deren Seitenwände mindestens zum Teil die Seitenwände des Schutzgehäuses bilden.

2. Geräteeinbaudose nach Anspruch 1, dadurch gekennzeichnet, daß die Schale an ihrer abklappbaren Seite mit einer Ausnehmung (24) versehen ist, die im geschlossenen Zustand mit dem an sie angrenzenden Wandteil (11) des Schutzgehäuses eine Zugentlastungseinrichtung für die Anschlußleitung (23) bildet.

3. Geräteeinbaudose nach Anspruch 1 oder 2, dadurch gekennzeichnet, daß die Schale (15, 150) mit angespritzten Schwenkzapfen (17) versehen ist, die in Aufnahmeöffnungen (18) eines mit einem Rahmenoberteil (11) des Schutzgehäuses festen Bodenteiles (14) einrastbar sind.

4. Geräteeinbaudose nach Anspruch 3, dadurch gekennzeichnet, daß die Schale (15) an der abklappbaren Seite Rasthaken (26) zum Einrasten in entsprechende Öffnungen (27) des Rahmenoberteiles (11) aufweist.

5. Doppel-Geräteeinbaudose nach Anspruch 1, für den Einbau einer 3fach-Steckdose oder zweier beliebiger Installationsgeräte, dadurch gekennzeichnet, daß in der Mitte des Schutzgehäuses (1) ein fester Bodenteil in der Form eines nach unten ragenden Bügels (14) vorgesehen ist und daß an diesem Bügel zwei Schalen (15) spiegelsymmetrisch angelenkt sind.

6. Doppel-Geräteeinbaudose nach Anspruch 5, dadurch gekennzeichnet, daß der Bügel (14) von einem Rahmenoberteil (11) aus nach unten ragt, der den oberen Teil des Schutzgehäuses (1) bildet.

7. Geräteeinbaudose nach einem der vorhergehenden Ansprüche, dadurch gekennzeichnet, daß die abklappbare Schale an ihren Seitenflächen und/oder an der Stirnseite mit zusätzlichen Öffnungen (19) in konventioneller Weise ausgestattet ist.

## Claims

1. Flush-mounting equipment connection box for installation ducts, particularly wall installation ducts (2) with a protective housing (1, 100) which is closed on all sides towards the interior of the channel and is made from electrically insulating material for building in installation equipment and which is provided with at least one insertion opening (19, 24, 25) for a connecting lead (23), characterised in that the protective housing (1, 100) has a base part which is formed by at least one shell (15, 150) which can be hinged downwards, the side walls of which at least in part form the side walls of the protective housing.

2. Flush-mounting equipment connection box as claimed in Claim 1, characterised in that the shell is provided on its side which can be hinged downwards with a recess (24) which in the closed state forms with the wall part (11) of the protective housing which adjoins it a pull relief arrangement for the connecting lead (23).

3. Flush-mounting equipment connection box as claimed in Claim 1 or 2, characterised in that the shell (15, 150) is provided with pivot lugs (17) which are injection-moulded on and can engage in receiving openings (18) in a base part (14) which is fixed to an upper frame part (11) of the protective housing.

4. Flush-mounting equipment connection box as claimed in Claim 3, characterised in that the shell (15) has on the side which can be hinged down latching hooks (26) for engaging in corresponding openings (17) in the upper frame part (11).

5. Double flush-mounting equipment connection box as claimed in Claim 1, for building in a three-pin socket or two pieces of any kind of installation equipment, characterised in that in the middle of the protective housing (1) there is provided a fixed base part in the form of a downwardly projecting stirrup (14) and that two shells (15) are articulated in mirror symmetry on this stirrup.

6. Double flush-mounting equipment connection box as claimed in Claim 5, characterised in that the stirrup (14) projects downwards out of an upper frame part (11) which forms the upper part of the protective housing (1).

7. Flush-mounting equipment connection box as claimed in one of the preceding claims, characterised in that the shell which can be hinged down is equipped in the conventional manner with additional openings (19) on its side surfaces and/or on the front face.

## Revendications

1. Boîtier encastré pour appareils destiné à des gaines techniques, en particulier des gaines techniques murales (2), comportant un carter de protection (1, 100), fermé sur tous les côtés vers l'intérieur de la gaine, en un matériau isolant électrique pour montage d'appareils d'installation, qui est pourvu d'au moins une ouverture d'introduction (19, 24, 25) pour une ligne de raccordement (23), caractérisé en ce que le carter de protection (1, 100) comporte une partie de fond, qui est formée par au moins une coque (15, 150) rabattable vers le bas, dont les parois latérales forment au moins en partie les parois latérales du carter de protection.

2. Boîtier encastré pour appareils selon la revendication 1, caractérisé en ce que la coque, sur son côté rabattable, est pourvue d'un évidement (24), qui à l'état fermé forme avec la partie de paroi voisine (11) du carter de protection un dispositif de décharge de traction pour la ligne de raccordement (23).

3. Boîtier encastré pour appareils selon la revendication 1 ou 2, caractérisé en ce que la coque (15, 150) est pourvue de tourillons pivotants (17) rapportés par injection, qui peuvent s'encliqueter dans des logements (18) d'une partie de fond (14) solidaire d'une partie supérieure de cadre (11) du carter de protection.

4. Boîtier encastré pour appareils selon la revendication 3, caractérisé en ce que la coque (15) comporte, sur son côté rabattable, des crochets d'encliquetage (26), pour s'encliqueter dans des ouvertures correspondantes (27) de la partie supérieure (11) du cadre.

5. Boîtier encastré double pour appareil selon la revendication 1, pour mise en place d'une prise triple ou de deux appareils d'installation au choix, caractérisé en ce que, au milieu du carter de protection (1), est prévue une partie de fond, fixe, se présentant sous la forme d'un étrier 14 dépassant vers le bas, et que deux coques (15) sont articulées d'une manière symétrique à cet étrier.

6. Boîtier encastré double pour appareil selon la revendication 5, caractérisé en ce que l'étrier 14 dépasse vers le bas à partir d'une partie supérieure de cadre (11), qui forme la partie supérieure du carter de protection (1).

7. Boîtier encastré pour appareil selon l'une des revendications précédentes, caractérisé en ce que la coque rabattable est, au niveau de ses faces latérales et/ou de sa face frontale, pourvue d'ouvertures supplémentaires (19) d'une manière classique.
